# NEW EUROPEAN PATENT SPECIFICATION

(11) **EP 2 675 623 B2**
(45) Date of publication and mention of the opposition decision: **23.09.2020**
(45) Mention of the grant of the patent: 22.02.2017
(21) Application number: 12700640.1
(22) Date of filing: 11.01.2012
(51) Int. Cl.: B41F 33/00

(54) **METHOD AND DEVICE FOR THE CONTROL AND MANAGEMENT OF THE PRINTING PARAMETERS OF A PRINTING MACHINE, PARTICULARLY WITH A PLURALITY OF CONSECUTIVE PRINTING PROCESSES**
VERFAHREN UND VORRICHTUNG FÜR DIE STEUERUNG UND VERWALTUNG DER DRUCKPARAMETER EINER DRUCKMASCHINE, INSBESONDERE MIT EINER VIELZAHL AUFEINANDER FOLGENDER DRUCKE
PROCÉDÉ ET DISPOSITIF POUR LA COMMANDE ET LA GESTION DE PARAMETRES D'IMPRIMAGE D'UNE IMPRIMANTE, SPÉCIALMENT AVEC UNE PLURALITÉ DE PROCÉDÉS D'IMPRIMAGE CONSECUTIFS

(30) Priority: 17.02.2011 IT MI20110232
(43) Date of publication of application: 25.12.2013
(73) Proprietor: Bobst Firenze S.r.l., 50013 Campi Bisenzio (FI) (IT)
(72) Inventor: D'ANNUNZIO, Federico, I-21040 Cislago (IT); CARDINOTTI, Matteo, I-55100 Lucca (IT)
(74) Representative: Hasler, David
(86) International application number: PCT/EP2012/050333
(87) International publication number: WO 2012/110265

(56) References cited:
- EP-A1- 2 455 315
- WO-A1-2011/007647
- US-A- 5 689 425
- US-A1- 2002 178 952
- US-A1- 2004 163 562

## Description

The present invention relates to a method and a device for the control and management of the printing parameters of a printing machine, particularly with a plurality of consecutive printing processes.

In the sector of printing machines, register control systems are known which use control photocells after each printing assembly.

Such photocells are effective in checking the print register, but they cannot be used for checking the pressure and print density because they follow an on-off logic. Moreover, such photocells force the operator to position them manually on the register mark at each change of work and for each printing and conversion assembly.

The photocells must also often be adjusted based on the print medium, on the reading color and on many other variables.

All these adjustment operations often lead the operator to not use such photocells because of the long startup time, which in any case necessitates a major and specialist intervention from the operator.

Also known are systems for detecting the density which use special in-line density sensors which however cannot be used for the register and pressure functions.

Owing to high costs, they are very rarely used on each printing assembly, but only at the end of the printing machine.

Even if they were used on each printing assembly, they would still be difficult to adjust and they would require considerable technical skills to manage them.

Finally, video cameras for end of line visual inspection are known that, among several different functions, can perform the detection of the pressure, the register and the density with a low level of accuracy.

Such video cameras, owing to their large size (which forces a complete redesign of the print and conversion assemblies), owing to the technology used (inspection of the entire printed matter, not focused on the register mark), and owing to their extremely high cost due to their original purpose (inspection of print quality, at 100%), make it impossible to justify their use from both an economical and functional point of view.

More exactly, the use of a video camera for the final inspection of the entire printed matter in order to perform the automatic checking of the register/pressure/density functions defeats the purpose of the checking and intervention function required, since this is performed only at the end of all the print and conversion processes.

For each correction of register, pressure or density it is necessary to wait for an entire length of print medium along all of the machine before evaluating its effectiveness, with a huge waste of material, moreover without being certain that the conditions have not changed again during the machine transition.

All this renders the intervention for correction useless, and in some cases damaging.

At startup, the end of line configuration is useless if not actually damaging since the operator, by working manually on each printing assembly, and not at the end of the line, is capable of achieving more accurate results, in shorter times and with a lower waste of material. Indeed, the end of line systems are especially used as systems for information collection and quality control of the printed matter, and almost never as systems for automatic intervention on the functions, even though these are an integral part of the system.

Its uselessness and lack of cost effectiveness are acknowledged, particularly if controlled functions overlap (register/pressure/density), particularly at startup, particularly on in-line printing machines, and particularly when printing on non-stable or expensive print media such as, for example, non-supported films, aluminum and laminates.

US2004163562 and US2002178952 describes known methods for the determination and the correction of registration errors in printing processes using image processing techniques.

The aim of the present invention is to devise and provide, respectively, a method and a device for the control and management of the printing parameters of a printing machine, particularly with a plurality of consecutive printing processes, which are capable of overcoming and solving, respectively, the limitations and drawbacks of the known art, by operating autonomously without the intervention of the operator, by handling the function of checking register, pressure and density, and by automatically making all the necessary adjustments, independently of the number of colors or of processes.

Within this aim, an object of the present invention is to devise and provide, respectively, a method and a device for control and management that are capable of offering the widest guarantees of reliability and safety in use.

Another object of the invention consists in providing a control and management device that is easy to implement and economically competitive when compared to the known art.

This aim and these and other objects, which will become better apparent hereinafter, are achieved by a device for the control and management of the printing parameters of a printing machine, particularly with a plurality of consecutive printing processes, characterized in that it comprises at least one video camera associable with a printing and conversion assembly and movable along a motorized guide in order to acquire a print medium, image processing means being further comprised which are functionally associated with said at least one video camera to search, recognize and measure, on the image of said print medium acquired by said at least one video camera, the printing values of at least one reference register mark reproduced on said print medium, said image processing means being functionally connected to means for the actuation of said printing and conversion assembly to correct and restabilize said printing values according to the difference between said printing values measured by said image processing means and the desired theoretical printing values.

Further characteristics and advantages of the invention will become better apparent from the detailed description of a preferred, but not exclusive, embodiment of a method and of a device for the control and management of the printing parameters of a printing machine, particularly with a plurality of consecutive printing processes, illustrated for the purposes of non-limiting example in the accompanying drawings wherein:

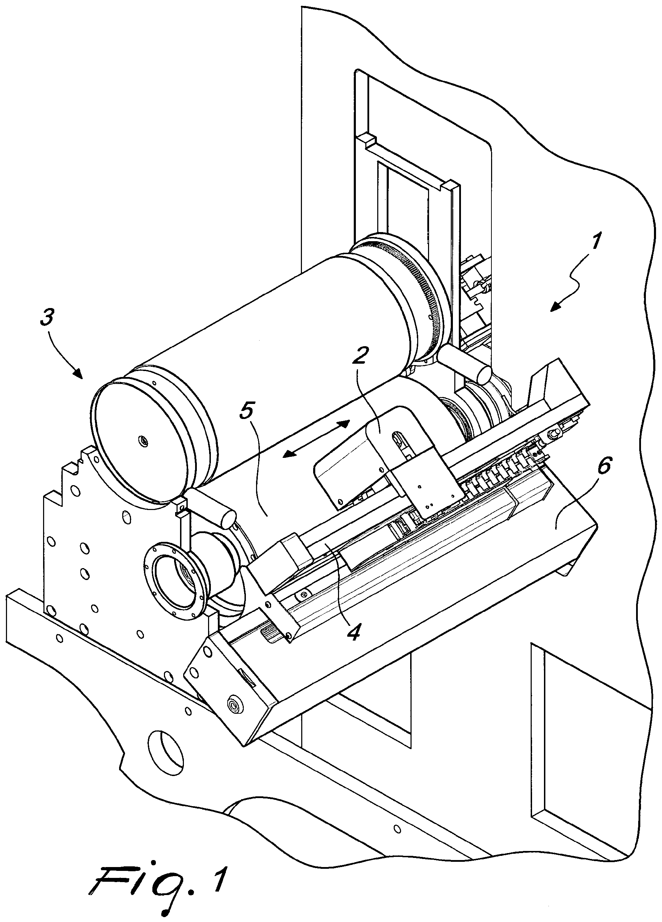

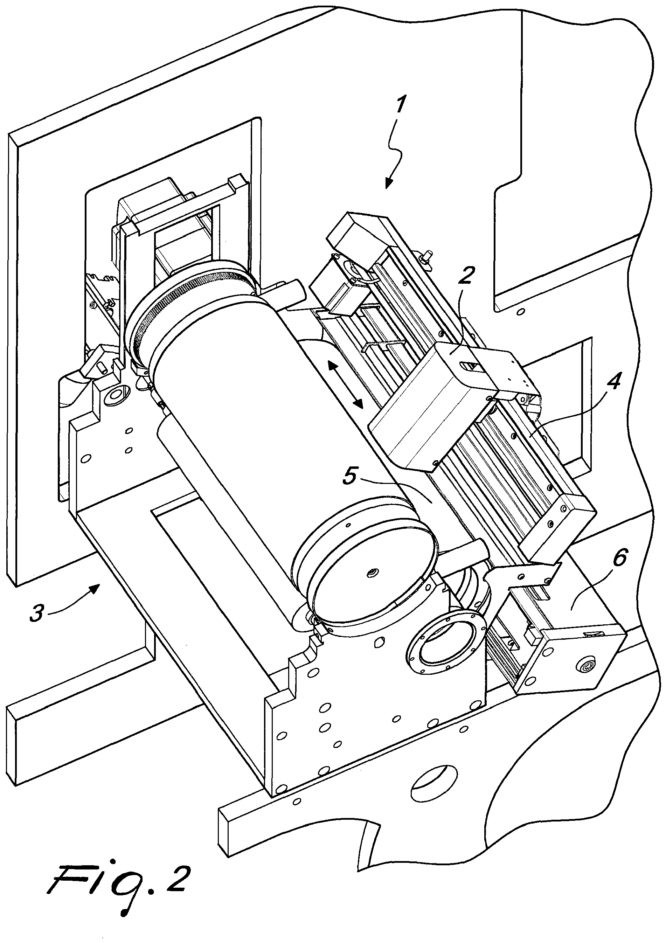

Figures 1 and 2 are two perspective views, on from the front and one from the rear, of an embodiment of a device for the control and management of the printing parameters of a printing machine, according to the present invention;

Figure 3 is a block diagram of a method for the control and management of the printing parameters of a printing machine, according to the present invention.

With reference to the figures, a device for the control and management of the printing parameters of a printing machine, particularly with a plurality of consecutive printing processes, generally designated with the reference numeral 1, comprises at least one video camera 2 associable with a printing and conversion assembly 3 and movable along a motorized guide 4 to acquire a print medium 5.

Advantageously, in order to have an optimal acquisition the video camera 2 can for example have a minimum resolution of 400 x 400 pixels per square centimeter and is arrangeable at a maximum distance of for example 50 mm from the printing and conversion assembly 3 so as to obtain a viewing field or inspection field of maximum size, for example of 16 x 12 mm.

Moreover, in order to have an adequate illumination of the viewing field of the video camera 2, lighting means 6 are provided that comprise ultraviolet ray lamps and are adapted to generate a constant and diffuse light over all of the exposure time.

Moreover, in order to automate the device 1, image processing means are provided which are functionally associated with the video camera 2 to search, recognize and measure on the image of the print medium 5 acquired by the video camera 2 the printing values of at least one reference register mark reproduced on the print medium 5.

More specifically, the image processing means are functionally connected to means for the actuation of the printing and conversion assembly 3, which are constituted by micro-servo drives, to correct and restabilize the printing values according to the difference between the printing values measured by the image processing means and the desired theoretical printing values.

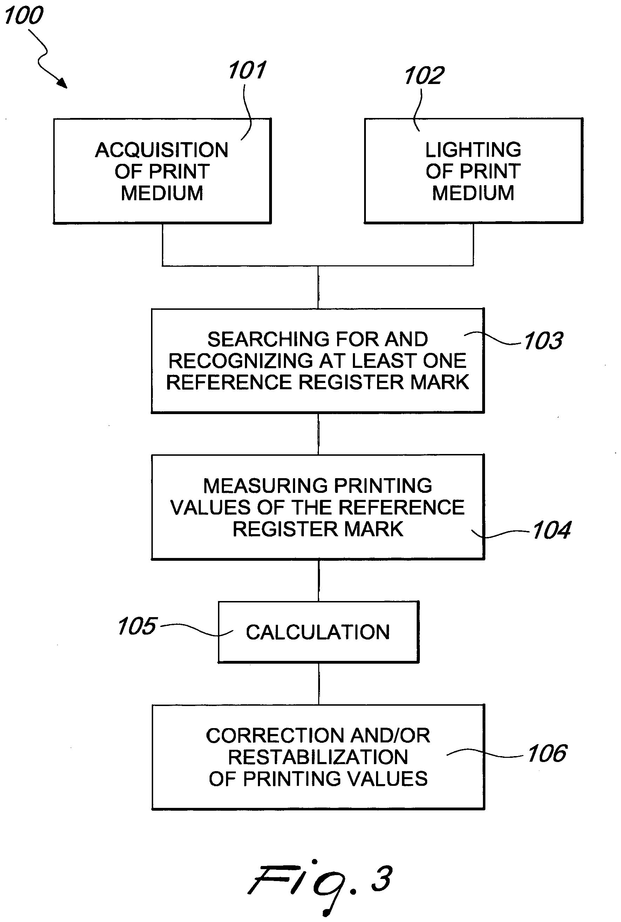

The method for the control and management of the printing parameters of a printing machine, particularly with a plurality of consecutive printing processes, generally designated with the reference numeral 100 in the block diagram in Figure 3, which can be provided with the device 1, comprises the following steps.

The first step 101 consists in the acquisition of a print medium 5 by means of the video camera 2, which is of the type with high resolution with a reduced inspection area and which due to its minimal size can be placed after each printing and conversion assembly 3 on the motorized guide 4, which enables it to move laterally over the print medium 5, according to preset reading cycles.

In parallel with the first step 101, there is a second step 102 that consists in lighting the viewing field of the video camera 2 with a constant and diffuse light by way of the lighting means 6 over the whole exposure time.

Subsequently, there is a third step 103 that consists in searching for and recognizing, by way of the image processing means, in the image of the print medium 5 acquired by the video camera 2, at least one reference register mark which is reproduced on the print medium 5.

The image processing means are responsible for a fourth step 104 which consists in measuring on the image of the print medium 5 acquired by the video camera 2 the printing values of the reference register mark reproduced on the print medium 5.

Subsequently, the fifth step 105 consists in calculating, by means of a CPU (Central Processing Unit) which can be integrated in the image processing means, the difference between the printing values measured by the image processing means and the desired theoretical printing values.

More exactly, the image processing means search for and recognize on the print medium 5 one or more specially printed reference marks, and measure their values of density, pressure and print register, comparing them with previously specified tolerances, and sending this information to the CPU which processes the data received.

Finally, the final step 106 consists in correcting and/or restabilizing the printing values by means of the intervention of the CPU of the image processing means, using specially developed algorithms, on the means for the actuation of the printing and conversion assembly 5 according to the calculated difference.

To sum up, the video camera 2, thanks to the reduced inspection surface, to the very high resolution, to the lighting means 6 and to the great internal processing capacity, is capable of detecting the following data.

First of all the print register is detected: the video camera 2 recognizes, by inspecting the printed matter and autonomously, the register mark printed by the process head, verifies the position of the mark with respect to a reference mark printed previously (master mark), and informs the CPU of the image processing means of any deviation of the mark with respect to the preset position (ideal register position). Finally, the CPU of the image processing means provides for the lateral and longitudinal shifting of the register mark until it reaches the ideal register position.

Secondly, the print pressure is detected: the image processing means recognize the same register mark, and a second one on the other side of the paper, and measures its size (calculated in numbers of pixels), comparing it with a theoretical value in order to establish whether the print pressure exerted on the print medium 5 is insufficient (missing or incomplete print: lower number of pixels) or excessive (excess squashing deformation of the print, and hence a higher number of pixels). It sends the measured values to the CPU which decreases or increases the print pressure on the assembly.

Finally, the density is detected: the video camera 2 again recognizes the same marks used for register and pressure, and the image processing means measure their reflection at a certain incident light having preset characteristics. The quantity and quality of light reflected are a function of the quantity of ink deposited on the specific print medium. The image processing means consequently provide for increasing or decreasing the quantity of ink on the print medium, according to preset values.

Moreover, the image processing means, by means of specially-developed software for identification and thanks to the lighting means 6, recognize every type of ink or even of paint, or even punching and embossing, and they can recognize register marks produced by any method of printing and conversion.

In practice it has been found that the method and the device for the control and management of the printing parameters of a printing machine, particularly with a plurality of consecutive printing processes, according to the present invention, achieve the intended aim and objects in that, by availing of a video camera with very high resolution, of reduced size, with reduced inspection area and dedicated to a unique mark of register/pressure/density on each printing and conversion assembly, at a very short distance from the print and conversion cylinder of each assembly, make it possible to obtain corrections that are automatic, immediate and simultaneous (as well as cumulative) of all the functions, thus achieving the high reduction of waste in the startup step, while at the same time ensuring the preset tolerances and ensuring repeatability and hence the predictability of waste and of print quality (as the sum of the three functions of register/pressure/density).

Moreover, the use of a video camera equipped with a special light enables the reading of special marks such as punching, embossing, paints, etc., which are impossible to read with other reading systems, thus making the invention particularly advantageous for controlling printing machines with a plurality of processes, in which all print quality adjustment is entrusted to the control system, independently of the number of colors and of processes used.

Another advantage of the method and of the device, according to the present invention, consists in that it uses the same reading mark for the print register, the pressure and the density, thus making recognition thereof immediate, and the numeric density value is immediately and easily read (a simple alphanumeric data item, independent of color, process etc.).

A further advantage of the method and of the device, according to the present invention, consists in that it makes all the adjustments that determine the print quality "digital", since they are measurable. The required tolerances, and hence the quality, are automatically ensured, both in the startup step and in the production step. In the same way it is possible to accurately predict the already low startup costs (time and waste) and the high production speeds, linked to mathematical formulas and algorithms. The operator can therefore concentrate on achieving the best productivity and the highest print quality, relying on the support of the universal and economic control system.

The method and the device for the control and management of the printing parameters of a printing machine, particularly with a plurality of consecutive printing processes, thus conceived, are susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements.

The disclosures in Italian Patent Application No. MI2011A000232 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for the control and management of the printing parameters of a printing machine, particularly with a plurality of consecutive printing processes, the device comprising Image processing means, and
For each printing and conversion assembly (3) of the printing machine,
- one video camera (2)
- associable with the printing and conversion assembly (3) and
- movable along a motorized guide (4) in order to acquire a print medium (5),
- the camera (2) being functionally associated with said image processing means to search, recognize and measure on the image of the print medium (5) acquired by the video camera (2) the printing values of at least one reference register mark reproduced on the print medium (5) by the printing and conversion assembly (3),
said image processing means being functionally connected to means for actuation of each printing and conversion assembly (3) to correct and restabilize said printing values according to the difference between the printing values measured by the image processing means and the desired theoretical printing values,
said printing values comprising density and printing register both measured on the same reference register mark,
said device being **characterized in that**
said printing values further comprise pressure,
wherein the image processing means detect the print pressure by measuring the size of said same reference register mark which is used for detecting the density and the printing register and by comparing its size with a theoretical value in order to establish whether the print pressure exerted on the print medium (5) is insufficient or excessive.

2. The device (1) according to claim 1, **characterized in that** it comprises means (6) for lighting a viewing field of the video camera (2), which are adapted to generate a constant and diffuse light throughout the exposure time.

3. The device (1) according to claim 1, **characterized in that** the video camera (2) has a minimum resolution of 400 x 400 pixels per square centimeter.

4. The device (1) according to one or more of the preceding claims, **characterized in that** the viewing field of the video camera (2) has a maximum size of 16 x 12 mm.

5. The device (1) according to one or more of the preceding claims, **characterized in that** the video camera (2) is arrangeable at a maximum distance of 50 mm from the printing and conversion assembly (3).

6. The device (1) according to one or more of the preceding claims, **characterized in that** said lighting means (6) comprise ultraviolet ray lamps.

7. A method (100) for the control and management of the printing parameters of a printing machine, particularly with a plurality of consecutive printing processes, by means of the device (1) according to one or more of the preceding claims, comprising the following steps:
- acquiring (101) a print medium (5) by means of said video camera (2);
- searching and recognizing (103), by said image processing means, within the image of the print medium (5) acquired by said video camera (2), at least one reference register mark reproduced on the print medium (5);
- measuring (104), on the image of said print medium (5) acquired by said video camera (2), the printing values of said at least one reference register mark reproduced on the print medium (5), said printing values comprising density and printing register both measured on the same reference register mark;
- calculating (105), by the image processing means, the difference between the printing values measured by said image processing means and the desired theoretical printing values;
- correcting and/or restabilizating (106) the printing values through the intervention of said image processing means on said means for the actuation of said printing and conversion assembly (3) according to said calculated difference;
**characterized in that**
said printing values further comprise pressure, the image processing means detecting the print pressure by measuring the size of said same reference register mark which is used for detecting the density and the printing register and by comparing its size with a theoretical value in order to establish whether the print pressure exerted on the print medium (5) is insufficient or excessive.

8. The method (100) according to claim 7, **characterized in that** it comprises a step (102) of lighting the viewing field of said video camera (2) with a constant and diffuse light by said lighting means (6) throughout the exposure time.

## Patentansprüche

1. Vorrichtung (1) zum Steuern und Verwalten der Druckparameter einer Druckmaschine, insbesondere mit einer Mehrzahl aufeinanderfolgender Druckprozesse, wobei die Vorrichtung Bildverarbeitungsmittel aufweist, und
für jede Druck- und Konversionsbaugruppe (3) der Druckmaschine,
- eine Videokamera (2)
- die mit der Druck- und Konversionsbaugruppe (3) in Verbindung bringbar ist und
- entlang einer motorisierten Führung (4) bewegbar ist, um ein Druckmedium (5) zu beziehen,
- wobei die Kamera (2) funktional mit den Bildverarbeitungsmitteln in Verbindung gebracht ist, um auf dem von der Videokamera (2) bezogenen Bild des Druckmediums (5) die Druckwerte von zumindest einem Referenzregisterzeichens, das auf dem Printmedium (5) von der Druck- und Konversionsbaugruppe (3) reproduziert ist, zu suchen, zu erkennen und zu messen,
wobei die Bildverarbeitungsmittel funktional mit Mitteln zur Betätigung der Druck-und Konversionsbaugruppe (3) verbunden sind, um die Druckwerte entsprechend der Differenz zwischen den durch die Bildverarbeitungsmittel gemessenen Druckwerten und den gewünschten theoretischen Druckwerten zu korrigieren und zu restabilisieren,
wobei die Druckwerte Dichte und Druckregister umfassen, die beide an dem gleichen Referenzregisterzeichen gemessen werden,
wobei die Vorrichtung dadurch charakterisiert ist, dass
die Druckwerte ferner Druck umfassen,
wobei die Bildverarbeitungsmittel den Abdruck-Druck mittels Messen der Größe des gleichen Referenzregisterzeichens detektieren, das für die Detektion der Dichte und des Druckregisters verwendet wird, und mittels Vergleichen dessen Größe mit einem theoretischen Wert, um zu bestimmen, ob der an das Druckmedium (5) ausgeübte Abdruck-Druck unzureichend oder übermäßig ist.

2. Vorrichtung (1) nach Anspruch 1, **dadurch gekennzeichnet, dass** sie Mittel (6) zum Beleuchten eines Sichtfeldes der Videokamera (2) umfasst, die angepasst sind, während der gesamten Belichtungszeit ein konstantes und diffuses Licht zu erzeugen.

3. Vorrichtung (1) nach Anspruch 1, **dadurch gekennzeichnet, dass** die Videokamera (2) eine Mindestauflösung von 400 x 400 Bildpunkten pro Quadratzentimeter aufweist.

4. Vorrichtung (1) nach einem oder mehreren der vorhergehenden Ansprüche, **dadurch gekennzeichnet, dass** das Sichtfeld der Videokamera (2) eine maximale Größe von 16 x 12 mm aufweist.

5. Vorrichtung (1) nach einem oder mehreren der vorhergehenden Ansprüche, **dadurch gekennzeichnet, dass** die Videokamera (2) in einem maximalen Abstand von 50 mm von der Druck- und Konversionsbaugruppe (3) anordenbar ist.

6. Vorrichtung (1) nach einem oder mehreren der vorhergehenden Ansprüche, **dadurch gekennzeichnet, dass** die Leuchtmittel (6) Ultraviolettlichtlampen aufweisen.

7. Verfahren (100) zum Steuern und Verwalten der Druckparameter einer Druckmaschine, insbesondere mit einer Mehrzahl aufeinanderfolgender Druckprozesse, mittels der Vorrichtung (1) nach einem oder mehreren der vorhergehenden Ansprüche, umfassend die folgenden Schritte:
- Beziehen (101) eines Druckmediums (5) mittels der Videokamera (2),
- Suchen und Erkennen (103) mindestens eines auf dem Druckmedium (5) wiedergegebenen Referenzregisterzeichens innerhalb des von der Videokamera (2) bezogenen Bildes des Druckmediums (5) mittels der Bildverarbeitungsmittel,
- Messen (104), an dem Bild des Druckmediums (5), das mittels der Videokamera (2) bezogen wurde, der Druckwerte des zumindest einen Referenzregisterzeichens, das an dem Druckmedium (5) widergegeben ist, wobei die Druckwerte, die Dichte und Druckregister umfassen, beide an dem gleichen Referenzregisterzeichen gemessen werden;
- Berechnen (105), mittels der Bildverarbeitungsmittel, der Differenz zwischen den mittels der Bildverarbeitungsmittel gemessenen Druckwerte und der gewünschten theoretischen Druckwerte mittels der Bildverarbeitungsmittel;
- Korrigieren und/oder Restabilisieren (106) der Druckwerte durch den Eingriff der Bildverarbeitungsmittel an den Mitteln zur Betätigung der Druck und Konversionsbaugruppe (3) gemäß der berechneten Differenz;
**dadurch gekennzeichnet, dass**
die Druckwerte ferner Druck umfassen, wobei die Bildverarbeitungsmittel den Abdruck-Druck mittels Messen der Größe des gleichen Referenzregisterzeichens detektieren, das für die Detektion der Dichte und des Druckregisters verwendet wird, und mittels Vergleichen dessen Größe mit einem theoretischen Wert, um zu bestimmen, ob der an das Druckmedium (5) ausgeübte Abdruck-Druck unzureichend oder übermäßig ist.

8. Verfahren (100) nach Anspruch 7, **dadurch gekennzeichnet, dass** es einen Schritt (102) zum Beleuchten des Sichtfeldes der Videokamera (2) mit einem konstanten und diffusen Licht durch die Leuchtmittel (6) während der gesamten Belichtungszeit umfasst.

## Revendications

1. Dispositif (1) pour la commande et la gestion des paramètres d'impression d'une machine d'impression, en particulier avec une pluralité de processus d'impression consécutifs, le dispositif comprenant
des moyens de traitement d'image, et
pour chaque ensemble d'impression et de conversion (3) de la machine d'impression,
- une caméra vidéo (2)
- associable à l'ensemble d'impression et de conversion (3) et
- mobile le long d'un guide motorisé (4) pour acquérir un support d'impression (5),
- la caméra (2) étant fonctionnellement associée auxdits moyens de traitement d'image pour rechercher, reconnaître et mesurer sur l'image du support d'impression (5) acquis par la caméra vidéo (2) les valeurs d'impression d'au moins un trait de repère de référence reproduit sur le support d'impression (5) par l'ensemble d'impression et de conversion (3),
lesdits moyens d'impression d'image étant fonctionnellement raccordés à des moyens d'actionnement de chaque ensemble d'impression et de conversion (3) pour corriger et re-stabiliser lesdites valeurs d'impression en fonction de la différence entre les valeurs d'impression mesurées par les moyens de traitement d'image et les valeurs d'impression théoriques souhaitées,
lesdites valeurs d'impression comprenant la densité et le repère d'impression, tous deux mesurés sur le même trait de repère de référence,
ledit dispositif étant **caractérisé en ce que**
lesdites valeurs d'impression comprennent en outre la pression,
dans lequel les moyens de traitement d'image détectent la pression d'impression en mesurant la taille dudit même trait de repère de référence qui est utilisé pour détecter la densité et le repère d'impression et en comparant sa taille à une valeur théorique afin d'établir si la pression d'impression exercée sur le support d'impression (5) est insuffisante ou excessive.

2. Dispositif (1) selon la revendication 1, **caractérisé en ce qu'**il comprend des moyens (6) pour éclairer un champ d'observation de la caméra vidéo (2), qui sont adaptés pour générer une lumière diffuse constante tout au long de la période d'exposition.

3. Dispositif (1) selon la revendication 1, **caractérisé en ce que** la caméra vidéo (2) a une résolution minimale de 400 x 400 pixels par centimètre carré.

4. Dispositif (1) selon une ou plusieurs des revendications précédentes, **caractérisé en ce que** le champ d'observation de la caméra vidéo (2) a une taille maximale de 16 x 12 mm.

5. Dispositif (1) selon une ou plusieurs des revendications précédentes, **caractérisé en ce que** la caméra vidéo (2) peut être aménagée à une distance maximale de 50 mm de l'ensemble d'impression et de conversion (3).

6. Dispositif (1) selon une ou plusieurs des revendications précédentes, **caractérisé en ce que** lesdits moyens d'éclairage (6) comprennent des lampes à rayons ultraviolets.

7. Procédé (100) pour la commande et la gestion des paramètres d'impression d'une machine d'impression, en particulier avec une pluralité de processus d'impression consécutifs, au moyen du dispositif (1) selon une ou plusieurs des revendications précédentes, comprenant les étapes suivantes :
- l'acquisition (101) d'un support d'impression (5) au moyen de ladite caméra vidéo (2) ;
- la recherche et la reconnaissance (103) par lesdits moyens de traitement d'image dans l'image du support d'impression (5) acquise par ladite caméra vidéo (2) d'au moins un trait de repère de référence reproduit sur le support d'impression (5) ;
- la mesure (104) sur l'image dudit support d'impression (5) acquis par ladite caméra vidéo (2) des valeurs d'impression dudit au moins un trait de repère de référence reproduit sur le support d'impression (5), lesdites valeurs d'impression comprenant la densité et le repère d'impression, tous deux mesurés sur le même trait de repère de référence ;
- le calcul (105) par les moyens de traitement d'image de la différence entre les valeurs d'impression mesurées par lesdits moyens de traitement d'image et les valeurs d'impression théoriques souhaitées ;
- la correction et/ou la re-stabilisation (106) des valeurs d'impression par l'intervention desdits moyens de traitement d'image sur lesdits moyens d'actionnement dudit ensemble d'impression et de conversion (3) en fonction de ladite différence calculée ;
**caractérisé en ce que**
lesdites valeurs d'impression comprennent en outre la pression, les moyens de traitement d'image détectant la pression d'impression en mesurant la taille dudit même trait de repère de référence qui est utilisé pour la détection de la densité et du repère d'impression et en comparant sa taille à une valeur théorique afin d'établir si la pression d'impression exercée sur le support d'impression (5) est insuffisante ou excessive.

8. Procédé (100) selon la revendication 7, **caractérisé en ce qu'**il comprend une étape (102) d'éclairage du champ d'observation de ladite caméra vidéo (2) avec une lumière diffuse constante par lesdits moyens d'éclairage (6) tout au long du temps d'exposition.
